# EUROPÄISCHE PATENTANMELDUNG

(11) **EP 2 026 150 A2**
(43) Veröffentlichungstag der Anmeldung: **18.02.2009**
(21) Anmeldenummer: 08105004.9
(22) Anmeldetag: 11.08.2008
(51) Int. Cl.: G05B 19/042

(54) **Verfahren zur Parametrierung eines Diagnosegerätes, korrespondierendes Computerprogramm und Computerprogrammprodukt sowie Diagnosesystem**

(30) Priorität: 13.08.2007 DE 102007038190
(71) Anmelder: Siemens Aktiengesellschaft, 80333 München (DE)
(72) Erfinder: Becker, Alexander, 76228, Karlsruhe (DE); Schehl, Alex, 76185, Karlsruhe (DE); Unger, Jürgen, 76351, Linkenheim-Hochstetten (DE); Vetek, Lajos György, 90478, Nürnberg (DE); Weidmann, Michael, 76227, Karlsruhe (DE)

(57) **Zusammenfassung**

Die Erfindung betrifft ein Verfahren zur Parametrierung eines Diagnosegerätes (12-16) mit einer vorgegebenen, aber parametrierbaren Funktionalität, wobei hinsichtlich der Parametrierbarkeit als eine Gerätebeschreibung eine elektronisch auswertbare Beschreibungsdatei (22) angelegt wird oder verfügbar ist, wobei die Beschreibungsdatei (22) mit einem auf einer von dem zu parametrierenden Diagnosegerät (12-16) unabhängigen Diagnosesystem (10) vorgehaltenen Parser (24) auswertbar ist, wobei für das zu parametrierende Diagnosegerät (12-16) auf dem Diagnosesystem (10) ein Repräsentant (28) vorgehalten wird und wobei zur Parametrierung des Diagnosegerätes (12-16) mittels des Parsers (24) eine Auswertung der Beschreibungsdatei (22) erfolgt und einem Anwender des Verfahrens anhand der Beschreibungsdatei (22) Parametrieroptionen zur Auswahl und/oder Änderung vorgeschlagen werden und wobei sich die Parametrierung auf den Repräsentanten (28) auswirkt.

## Beschreibung

Die Erfindung betrifft ein Verfahren zur Parametrierung eines Diagnosegerätes, z.B. eines Diagnosegerätes, wie es in an sich bekannter Art und Weise in Werkstätten zur Diagnose von Kraftfahrzeugen eingesetzt wird. Solche Diagnosegeräte haben eine vorgegebene, aber parametrierbare Funktionalität. Solche Geräte werden im Zusammenhang mit einem Diagnosesystem betrieben, das prinzipiell als Komponenten ein Autorensystem und ein Werkstattsystem umfasst. Je nach Betrachtungsweise umfasst das Diagnosesystem auch das Diagnosegerät oder das Diagnosesystem interagiert mit dem jeweiligen Diagnosegerät. Mithilfe des Autorensystems werden die zu diagnostizierenden Fahrzeuge bezüglich ihrer elektronischen Ausstattung beschrieben, Testprogramme zur Diagnose defekter Elektronikteile erstellt und Dokumente wie Reparaturanleitungen verwaltet. Das Werkstattsystem interpretiert die vom Autorensystem bereitgestellten Daten und kommuniziert hierzu über ein oder mehrere Diagnosegeräte mit dem Fahrzeug. Über Diagnosegeräte werden z.B. Fehlercodes aus den Steuergeräten des Fahrzeugs oder Messwerte von Signalgebern des Fahrzeugs gelesen.

Hinsichtlich solcher Diagnosesysteme und Diagnosegeräte ist bekannt, dass die Diagnosegeräte in das Diagnosesystem integriert werden, indem die Software des Diagnosesystems speziell für die Eigenschaften konkreter Diagnosegeräte entwickelt wird. Dafür erforderliche programmtechnische Anpassungen sind in einem Teilsystem zur Parametrierung der Diagnosegeräte durch den Benutzer, dem Autorensystem, und in einem Teilsystem zum Betrieb der Diagnose am Fahrzeug, also dem Werkstattsystem, erforderlich. Solche Anpassungen können heute jeweils nur durch den Hersteller des Diagnosesystems durchgeführt werden. Entsprechende Anpassungen der Software des Diagnosesystems durch dessen Hersteller sind auch bei Funktionserweiterungen oder Funktionsmodifikationen der Diagnosegeräte durchzuführen.

Eine solche Abhängigkeit vom Diagnosesystemhersteller wird als nachteilig empfunden, weil z.B. modernisierte Diagnosegeräte mit einem bestehenden Diagnosesystem erst betrieben werden können, wenn die Software des Diagnosesystems an die erweiterte Funktionalität des Diagnosegerätes angepasst ist.

Aus der DE 103 07 698 A1 ist eine Steuergerät zum Steuern eines Antriebsaggregates eines Fahrzeugs bekannt. Darin werden einzelne Funktionseinheiten zu Modulen zusammengefasst, welche über Schnittstellen verfügen, so dass eine Kommunikation des Steuergeräts mit den Modulen und der Module untereinander möglich ist. Ein Austausch einzelner Module oder ihrer Funktionseinheiten wird dabei dadurch vereinfacht, dass Abhängigkeiten der einzelnen Funktionseinheiten in den Kommunikationsschnittstellen berücksichtigt werden. Dadurch muss z.B. bei Verwendung eines anderen Prozessors des Steuergeräts nicht mehr die gesamte Software des Steuergeräts ausgetauscht oder angepasst werden, sondern es reicht aus, wenn eine in einem der Module angeordnete Funktionseinheit ausgetauscht wird. Die Konfiguration der einzelnen Module oder Funktionseinheiten erfolgt auf unterschiedlichen Ebenen, so dass nur die Konfigurationsparameter angegeben werden müssen, die für die jeweilige Schicht relevant sind.
Weiterhin ist in der WO 2006/114112 A1 ein Konfigurationssystem eines Fahrzeugs und ein Verfahren zur Konfiguration mindestens einer Steuereinheit des Konfigurationssystems beschrieben. Einer Steuereinheit sind eine Funktionseinheit und eine Parametriereinheit zugeordnet. Die Parametriereinheit ist für die Konfiguration der Steuer- oder Funktionseinheiten zuständig. Werden solche Einheiten in dem Fahrzeug hinzugefügt oder verändert, wird dies von der Parametriereinheit erkannt, die Konfigurationsinformationen, die in einem Speichermittel in der Steuereinheit zur Verfügung stehen, werden ausgelesen und die Konfiguration der Steuer- oder Funktionseinheit erfolgt vollautomatisch und selbstständig.

Die oben genannte Vorrichtung und das oben genannte Verfahren beschränken sich jedoch auf die Konfiguration von im Fahrzeug befindliche Funktionseinheiten.

Aus der WO 02/090918 A2 ist außerdem ein Diagnosesystem bekannt, welches Schnittstellen aufweist, über die eine Mehrzahl von Modulen angeschlossen werden kann, z.B. Gas- und/ oder Motoranalysatoren. Diese Module können über verschiedene Verbindungen und Protokolle mit dem Diagnosesystem gekoppelt werden, so dass dieses auf die Module zugreifen kann. Das Diagnosesystem ruft gewünschte Informationen direkt von einem entsprechenden Modul ab, dessen Funktionalität dem Diagnosesystem bekannt ist oder über die Schnittstelle direkt implementiert wird. Auch aus den US 7 155 321 B2, US 7 092 803 und US 2005/0065678 A1 sind ähnliche Diagnosesysteme bekannt, bei denen Betriebsdaten eines Fahrzeugs abgerufen werden können.

Eine Aufgabe der Erfindung besteht entsprechend darin, ein Verfahren zur Parametrierung eines Diagnosesystems und eines Diagnosegerätes anzugeben, bei dem die jeweilige Funktionalität des Diagnosegerätes im Diagnosesystem unmittelbar mit der Verfügbarkeit des Diagnosegerätes zur Verfügung steht.

Diese Aufgabe wird mit den Merkmalen des Anspruchs 1 gelöst. Dazu ist bei einem Verfahren zur Parametrierung eines Diagnosegerätes mit einer vorgegebenen, aber parametrierbaren Funktionalität vorgesehen, dass hinsichtlich der Parametrierbarkeit als eine Gerätebeschreibung eine elektronisch auswertbare Beschreibungsdatei angelegt wird oder verfügbar ist, dass die Beschreibungsdatei mit einem auf dem von dem zu parametrierenden Diagnosegerät unabhängigen Diagnosesystem vorgehaltenen Parser auswertbar ist, dass für das zu parametrierende Gerät auf dem Diagnosesystem ein Repräsentant vorgehalten wird und dass zur Parametrierung des Diagnosegerätes mittels des Parsers eine Auswertung der Beschreibungsdatei erfolgt und einem Anwender des Verfahrens anhand der Beschreibungsdatei Parametrieroptionen zur Auswahl und/oder vorgeschlagen werden, wobei sich die Parametrierung auf den Repräsentanten auswirkt.

Die Eigenschaften eines Diagnosegerätes werden also nicht mehr in Code programmiert, sondern in einer vorgegebenen Sprache beschrieben und in der Beschreibungsdatei vorgehalten. Die Sprachelemente und damit das "Vokabular" für die Gerätebeschreibung wird für das Diagnosesystem vorgegeben. Die Sprachelemente erlauben die Beschreibung aller Eigenschaften eines Diagnosegerätes. Bevorzugt ergibt sich bei einer solchen Gerätebeschreibung eine baumartige Struktur. Bäume sind geeignet, Geräteeigenschaften und Geräteeinstellungen hierarchisch zu strukturieren und Abhängigkeiten zu modellieren. Hierarchie und Abhängigkeiten sind typische Anforderungen bei der Modellierung von Diagnosegeräteeigenschaften. Eine dafür geeignete Sprache ist XML. Eine geeignete Form zur Sprachdefinition ist XML-Schema.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Wenn die Beschreibungsdatei in einem festgelegten, hierarchischen Format, insbesondere im XML-Format angelegt wird oder verfügbar ist, ist eine Betriebsart, bei der der Vorschlag von Parametrieroptionen an den Anwender der Hierarchie der Beschreibungsdatei folgt, leicht realisierbar.

Bevorzugt ist vorgesehen, dass entlang der Hierarchie der Beschreibungsdatei durch das Diagnosesystem aufgrund bisheriger Parametrieroptionen Plausibilitätskontrollen durchgeführt werden und nur der Plausibilitätskontrolle genügende Parametrieroptionen vorgeschlagen werden. Dann können, wenn der Benutzer bei der Auswahl einer ersten Parametrieroption sich beispielsweise für eine Parametrierung der Kommunikationsparameter zur Kommunikation mit dem jeweiligen Diagnosegerät entschieden hat, als Parametrieroption im weiteren Verlauf der Parametrierung nur solche Optionen vorgeschlagen werden, die sich auf Kommunikationseigenschaften beziehen. Andere Parametrieroptionen, z.B. Messwertebereiche und dergleichen, werden unterdrückt. Der Benutzer wird damit mit einer reduzierten Informationsmenge konfrontiert, so dass die Parametrierung schnell vonstatten gehen kann.

Besonders bevorzugt ist dabei vorgesehen, dass das Diagnosesystem die Beschreibungsdatei mittels des Parsers iterativ liest und je Iteration anhand des Repräsentanten gültige Parametrieroptionen vorgeschlagen werden. Dann erfolgt die Auswertung der Beschreibungsdatei quasi schichtweise, wobei mit jedem Iterationsschritt eine Schicht, also eine Hierarchieebene in der Beschreibungsdatei ausgewertet wird. Anhand des auf dem Diagnosesystem vorgehaltenen Repräsentanten kann dann eine weitere Reduktion der Informationsmenge erfolgen. Wenn für ein Diagnosegerät grundsätzlich unterschiedliche Kommunikationsverfahren unterstützt werden, eine konkrete Ausführungsform eines solchen Diagnosegerätes aber tatsächlich, z.B. durch entsprechende Bestellung beim Hersteller, nur eines der Kommunikationsverfahren unterstützt, finden sich diesbezügliche Eintragungen im Repräsentanten. Wenn also der Benutzer für eine konkrete Parametrierung eines Diagnosegerätes eine Parametrierung der Kommunikation ausgewählt hat, kann die Plausibilitätskontrolle dafür sorgen, dass Parameter, die sich nicht auf die Kommunikation beziehen, ausgeblendet werden. Wenn zusätzlich noch im Repräsentanten für das jeweilige Diagnosegerät hinterlegte Daten berücksichtigt werden, können auch solche Parameter unterdrückt werden, die zwar der vom Benutzer gewählten Kategorie genügen, vom jeweiligen Diagnosegerät aber nicht unterstützt werden.

Das vorstehend beschriebene und nachfolgend weiter erläuterte Verfahren ist bevorzugt in Software ausgeführt, so dass die Erfindung auch ein Computerprogramm mit durch einen Computer ausführbaren Programmcode Anweisungen zur Implementierung des Verfahrens betrifft. In gleicher Weise betrifft die Erfindung auch ein Computerprogrammprodukt, insbesondere ein Speichermedium und dergleichen, mit einem durch einen Computer ausführbaren derartigen Computerprogramm. Schließlich betrifft die Erfindung auch ein Diagnosesystem mit einem dort implementierten derartigen Computerprogramm.

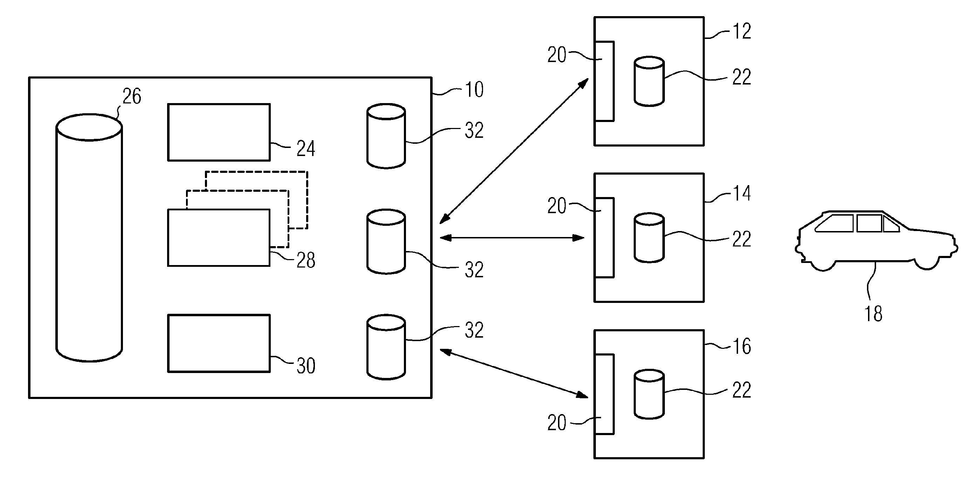

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie Prüf- und Arbeitsverfahren betreffen.

Nachfolgend wird ein Ausführungsbeispiel der Erfindung anhand der Zeichnung näher erläutert.

Darin zeigt die einzige FIGUR schematisch vereinfacht ein Diagnosesystem, das zur Diagnose eines Kraftfahrzeugs auf Diagnosegeräte zurückgreift.

Die FIGUR zeigt in schematisch vereinfachter Darstellung ein Diagnosesystem 10, mit dem ein oder mehrere Diagnosegeräte 12, 14, 16 zur Diagnose eines Kraftfahrzeugs 18 kommunikativ oder in sonstiger Weise in Verbindung stehen. Jedes Diagnosegerät 12-16 bietet eine vorgegebene, aber parametrierbare Funktionalität, die im Wesentlichen durch die Bauart des jeweiligen Diagnosegeräts 12-16 vorgegeben ist. Die Parame-trierung der Funktionalität eines Diagnosegeräts 12-16 ist in der FIGUR schematisch vereinfacht als Schnittstelle 20 eines jeden Diagnosegeräts 12-16 dargestellt. Zur Bedienung dieser Schnittstelle 20 war bisher eine auf dem Diagnosesystem 10 vorgehaltene, auf das jeweilige Diagnosegerät 12-16 abgestimmte Software erforderlich.

Jetzt umfasst jedes Diagnosegerät 12-16 für dessen Parametrierbarkeit als eine Gerätebeschreibung eine elektronisch auswertbare Beschreibungsdatei 22. Eine solche Beschreibungsdatei 22 ist mit einem auf dem von dem jeweils zu parametrierenden Diagnosegerät 12-16 unabhängigen Diagnosesystem 10 vorgehaltenen Parser 24 auswertbar. Für das zu parametrierende Diagnosegerät 12-16 wird dessen Beschreibungsdatei 22 als importierte Beschreibungsdatei 26 in das Diagnosesystem 10 eingelesen. Für das zu parametrierende Diagnosegerät 12-16 wird weiterhin auf dem Diagnosesystem 10 ein Repräsentant 28 vorgehalten, in dem z.B. Basisparametrierungen des jeweiligen Diagnosegeräts 12-16 oder sonstige Daten in Bezug auf dieses Diagnosegerät 12-16 vorgehalten werden.

Zur eigentlichen Parametrierung des Diagnosegerätes 12-16 erfolgt mittels des Parsers 24 eine Auswertung der Beschreibungsdatei 22, also z.B. eine Auswertung der importierten Beschreibungsdatei 26. Im Zuge dieser Auswertung werden einem Anwender des Parametrierverfahrens anhand der Beschreibungsdatei 22 bzw. der importierten Beschreibungsdatei 26 Parametrieroptionen über ein vom Diagnosesystem 10 umfasstes Autorensystem 30 zur Auswahl und/oder Änderung vorgeschlagen. Vorgenommene Parametrierungen werden dabei in einem Parametrierungsdatensatz 32 abgelegt. Für ein Diagnosegerät 12-16 können auf diese Weise eine Mehrzahl von Parametrierungsdatensätzen 32 generiert werden.

Die Erstellung eines Parametrierungsdatensatzes 32 und damit die Grundlage für eine spätere Parametrierung eines Diagnosegerätes 12-16 erfolgt dabei derart, dass das Autorensystem 30 anhand des Repräsentanten 28 des jeweiligen Diagnosegerätes 12-16 Informationen über dessen Funktionalität erhält. Dabei kann sich z.B. ergeben, dass das Diagnosegerät 12-16 die Funktionalität eines zweikanaligen Oszilloskops bereitstellt. Anhand der importierten Beschreibungsdatei 26, kann nunmehr eine Parametrierung dieser Funktionalität erfolgen. Nachdem es sich in dem gewählten Szenario um ein zweikanaliges Oszilloskops handeln soll, werden unmittelbar in der importierten Beschreibungsdatei 26 die zugehörigen Parametrieroptionen ausgewählt, mit denen z.B. zunächst oder zumindest eine Parametrierung des ersten Oszilloskopkanals und anschließend ggf. eine Parametrierung des zweiten Oszilloskopkanals erfolgt. Ist eine Parametrierung abgeschlossen, hier z.B. eine Parametrierung nur des ersten Oszilloskopkanals für eine Spannungsmessung im Bereich von 0V bis 5V, werden die bei der Parametrierung aufgenommenen Daten in einem Parametrierungsdatensatz 32 abgelegt und stehen dort zur späteren Verwendung mit dem tatsächlichen Diagnosegerät 12-16 aber auch für Änderungen und dergleichen zur Verfügung.

Mit dem vom Diagnosesystem 10 umfassten Autorensystem 30 wird auch ein zu diagnostizierendes Fahrzeug 18 bezüglich seiner elektronischen Ausstattung beschrieben. Das Diagnosesystem 10, ggf. ein davon umfasstes, nicht dargestelltes so genanntes Werkstattsystem, interpretiert mittels des Repräsentanten 28 des jeweiligen Diagnosegerätes 12-16 zumindest einen der vom Autorensystem 30 bereitgestellten Parametrierungsdatensätze 32 und kommuniziert über den Repräsentanten 28 und einer ausgewählten Parametrierung, also einem Parametrierungsdatensatz 32, mit dem Diagnosegerät 12-16 und damit zumindest mittelbar mit dem jeweiligen Fahrzeug 18.

Die Beschreibungsdatei 22 liegt dabei in einem festgelegten, hierarchischen Format, insbesondere im XML-Format, vor. In einem XSD-Format kann als Bauplan für eine Modellierung des in der Beschreibungsdatei 22 vorgehaltenen Parameterbaums ein Schema vorgegeben werden. Zur leichten Interpretierbarkeit der in einem Parametrierungsdatensatz 32 vorgehaltenen Parametrierungsdaten ist vorteilhaft vorgesehen, dass als Format für einen Parametrierungsdatensatz 32 ein der Beschreibungsdatei 22 zumindest entsprechendes Format, insbesondere das gleiche Format, gewählt wird.

Damit der Benutzer gewünschte Eigenschaften, z.B. für eine Messung oder einen Kommunikationsvorgang des Diagnosegerätes 12-16 einstellen kann, analysiert der Parser 24 die in der Beschreibungsdatei 22 bzw. der importierten Beschreibungsdatei 26 hinterlegten Daten. Zum Abgleich der aus der importierten Beschreibungsdatei 26 zu verwendenden Daten mit der tatsächlichen Funktionalität eines zu parametrierenden Diagnosegeräts 12-16 wird der Repräsentant 28 des jeweiligen Diagnosegeräts 12-16 herangezogen. Bei einem baumartigen, hierarchischen Format der Beschreibungsdatei werden dem Benutzer beginnend von einem Wurzelknoten die mit einem vom Wurzelknoten abgehenden Knoten assoziierten Daten vorgelegt. Wählt der Benutzer einen dieser Knoten aus, legt der Parser 24 nur noch die Daten der von diesem Knoten ausgehenden Knoten zur Auswahl vor, usw. Vor einer Vorlage von Daten eines Knotens wird anhand des Repräsentanten 28 sichergestellt, ob eine eventuelle Auswahl dieses Knotens anhand der bisher gewählten Knoten eine gültige Wahl wäre. Ist dies nicht der Fall, werden Daten dieses Knotens nicht vorgelegt. Durch diesen Vorgang können nur "im Kontext gültige Knoten" gewählt werden. Auf diese Weise ausgewählte Knoten werden als "ausgewählter Parameterbaum" in einem Parametrierungsdatensatz 32 gespeichert. Im Wechselspiel zwischen Benutzer, Parser 24 und dem in der Beschreibungsdatei 22 bzw. der importierten Beschreibungsdatei 26 gespeicherten Parameterbaum kann so durch den gesamten Parameterbaum navigiert werden. Wird im Zuge einer solchen Navigation ein Blatt des Baumes, also ein Knoten, dem keine weiteren Knoten nachfolgen, erreicht, ist eine Teilparametrierung des jeweiligen Diagnosegerätes 12-16 vollständig.

Für die Repräsentation unterschiedlichster Diagnosegeräte 12-16 beim Parametriervorgang und für den Betrieb solcher Diagnosegeräte 12-16 am Fahrzeug 18 ist eine vom Diagnosesystem 10 umfasste und schematisch in Form des Repräsentanten 28 dargestellte Softwarekomponente vorgesehen, welche "Kenntnis" vom gesamten Parameterbaum und darin jeweils erlaubten Strängen , also Verbindungen zwischen verschiedenen Knoten, hat. Diese Softwarekomponente (Repräsentant 28) stellt ihre Eigenschaften zum Einen über vom Diagnosesystemlieferanten festgelegte Schnittstellen dem Autorensystem 30 zur Verfügung. Zum Anderen stellt diese Softwarekomponente ihre Eigenschaften über ebenfalls vom Diagnosesystemlieferanten festgelegte Schnittstellen dem Werkstattsystem zur Verfügung, das danach die von jedem Diagnosegerät 12-16 umfassten Schnittstellen 20 bedient und im Repräsentanten 28 für das jeweilige Diagnosegerät 12-16 ausgewählte Parameter durch Übermittlung an diese Schnittstelle 20 dem jeweiligen Diagnosegerät 12-16 einprägt. Die Softwarekomponente, also im Wesentlichen der Repräsentant eines Diagnosegerätes 12-16 kann jederzeit unabhängig sowohl von Lieferanten von Diagnosegeräten 12-16, wie auch unabhängig vom Diagnosesystem 10 erstellt werden.

## Patentansprüche

1. Verfahren zur Parametrierung eines Diagnosegerätes (12-16) mit einer vorgegebenen, aber parametrierbaren Funktionalität,
- wobei hinsichtlich der Parametrierbarkeit als eine Gerätebeschreibung eine elektronisch auswertbare Beschreibungsdatei (22) angelegt wird oder verfügbar ist,
- wobei die Beschreibungsdatei (22) mit einem auf einer von dem zu parametrierenden Diagnosegerät (12-16) unabhängigen Diagnosesystem (10) vorgehaltenen Parser (24) auswertbar ist,
- wobei für das zu parametrierende Diagnosegerät (12-16) auf dem Diagnosesystem (10) ein Repräsentant (28) vorgehalten wird und
- wobei zur Parametrierung des Diagnosegerätes (12-16) mittels des Parsers (24) eine Auswertung der Beschreibungsdatei (22) erfolgt und einem Anwender des Verfahrens anhand der Beschreibungsdatei (22) Parametrieroptionen zur Auswahl und/oder Änderung vorgeschlagen werden und wobei sich die Parametrierung auf den Repräsentanten (28) auswirkt.

2. Verfahren nach Anspruch 1, wobei die Beschreibungsdatei (22) in einem festgelegten, hierarchischen Format, insbesondere im XML-Format, angelegt wird oder verfügbar ist.

3. Verfahren nach Anspruch 2, wobei der Vorschlag von Parametrieroptionen an den Anwender der Hierarchie der Beschreibungsdatei (22) folgt.

4. Verfahren nach Anspruch 3, wobei entlang der Hierarchie der Beschreibungsdatei (22) durch das Diagnosesystem (10) aufgrund bisheriger Parametrieroptionen Plausibilitätskontrollen durchgeführt werden und nur der Plausibilitätskontrolle genügende Parametrieroptionen vorgeschlagen werden.

5. Verfahren nach Anspruch 3 oder 4, wobei das Diagnosesystem (10) die Beschreibungsdatei (22) mittels des Parsers (24) iterativ liest und je Iteration anhand des Repräsentanten (28) gültige Parametrieroptionen vorgeschlagen werden.

6. Computerprogramm mit durch einen Computer ausführbaren Programmcodeanweisungen zur Implementierung des Verfahrens nach einem der Ansprüche 1 bis 5 wenn das Computerprogramm auf einem Computer ausgeführt wird.

7. Computerprogrammprodukt, insbesondere Speichermedium, mit einem durch einen Computer ausführbaren Computerprogramm gemäß Anspruch 6.

8. Diagnosesystem mit einem dort implementierten Computerprogramm gemäß Anspruch 6.
